# EUROPÄISCHE PATENTSCHRIFT

(11) **EP 2 288 827 B1**
(45) Veröffentlichungstag und Bekanntmachung des Hinweises auf die Patenterteilung: **01.02.2012**
(21) Anmeldenummer: 09765697.9
(22) Anmeldetag: 20.05.2009
(51) Int. Cl.: F16H 63/30, F16H 63/20

(54) **SCHALTVORRICHTUNG**
SELECTOR SYSTEM
DISPOSITIF DE CHANGEMENT DE VITESSES

(30) Priorität: 19.06.2008 DE 102008029267
(43) Veröffentlichungstag der Anmeldung: 02.03.2011
(73) Patentinhaber: Schaeffler Technologies GmbH & Co. KG, 91074 Herzogenaurach (DE)
(72) Erfinder: MAIER, Waldemar, 91074 Herzogenaurach (DE)
(86) Internationale Anmeldenummer: PCT/EP2009/056112
(87) Internationale Veröffentlichungsnummer: WO 2009/153117

(56) Entgegenhaltungen:
- EP-A- 0 488 857
- EP-A- 0 668 459
- EP-A- 1 510 733
- DE-A1- 10 210 972
- DE-A1- 19 942 562
- GB-A- 2 325 714
- US-A- 5 819 590

## Beschreibung

Die Erfindung betrifft eine Schaltvorrichtung mit einem zumindest schwenkbaren ersten Schaltelement und wenigstens einem verschiebbaren zweiten Schaltelement, wobei das erste Schaltelement um eine Schwenkachse schwenkbar und das zweite Schaltelement quer zur Schwenkachse in zwei Querrichtungen hin und her verschiebbar ist und wobei das erste Schaltelement und das zweite Schaltelement über einen in eine Schaltmaul eingreifenden Schaltfinger miteinander gekoppelt sind.

### Hintergrund der Erfindung

Eine derartige Schaltvorrichtung ist in DE199 42 562 A1 beschrieben. Das schwenkbare Schaltelement ist eine Hülse. Die Hülse sitzt fest auf einer Schaltwelle. Die Hülse ist mit der Schaltwelle entlang der Mittelachse der Schaltwelle verschiebbar. Die Mittelachse der Schaltwelle ist die Schwenkachse, um die die Hülse bei Schwenkbewegungen der Schaltwelle schwenkbar ist. An der Hülse ist ein Schaltfinger befestigt. Das zweite Schaltelement ist beispielsweise eine Schaltschiene, an der eine Schaltgabel befestigt ist. Alternativ dazu ist das Schaltelement die Schaltgabel selbst, die verschiebbar beispielsweise auf einer Schaltstange sitzt. An dem zweiten Schaltelement ist ein Schaltmaul ausgebildet oder befestigt. Zum Schalten ist der Eingriff des Schaltfingers in ein Schaltmaul erforderlich. Schaltmäuler sind in der allgemeinsten Form in zwei entgegengesetzte Richtungen begrenzte Eingriffskonturen, in die der Schaltfinger eingreift. Die Schaltmäuler weisen an zwei entgegengesetzten Abschnitten zueinander beabstandete Anschläge auf, an denen der Schaltfinger abwechselnd zwecks Weitergabe einer Bewegung anliegen muss. Der Schaltfinger ist ein hervorstehendes Element, das geeignet ist, in das Schaltmaul, d.h. in den Abstand zwischen die Anschläge einzugreifen.

Schalt- und Wählbewegungen werden über die Schaltwelle durch Verschieben und Schwenken übertragen. Es gibt Schaltvorrichtungen, in denen durch Schwenken des Schaltfingers die gewünschte Gasse zum Schalten eines Ganges gewählt und durch Verschiebung der Gang eingelegt wird. Alternativ werden Schaltwellen zur Vorwahl der Gassen verschoben, dabei wird der Schaltfinger in einen formschlüssigen Eingriff mit einem Schaltmaul an einem zweiten Schaltelement gebracht. Dann wird durch Schwenken der Schaltwelle der Gang eingelegt. Dabei wird das mit dem Schaltmaul verbundene zweite Schaltelement quer zur Schwenkachse verschoben.

Die Hülse wird oft auch als Rastierhülse bezeichnet und weist in der Regel mehrere Funktionselemente auf. Ein Funktionselement ist, wie oben beschreiben, ein oder mehrere der Schaltfinger. Weitere Funktionselemente sind beispielsweise die in DE199 42 562 A1 beschriebenen Rastierkonturen oder Sperranschläge. Das Bauteil ist einfach aus einem Flachmaterial herstellbar, dass aus einem Blechstreifen hergestellt wird. Der Blechstreifen wird zunächst vor dem Biegen mit den entsprechenden Formen der Rastierkontur und den Ausschnitten für die Sperranschläge und den Schaltfinger versehen. Dann wird der Blechstreifen rund gebogen und die aufeinander zugebogenen Enden werden form- oder stoffschlüssig aneinander befestigt. Schließlich wird die Hülse an der Schaltwelle befestigt und der Schaltfinger auf die Rastierhülse aufgesetzt und durch Nieten und/oder Schweißen an dieser befestigt.

In der DE 102 10 972 A1, welche alle merkmale des Oberbegriffs des Anspruchs 1 offenbart, ist eine Schalteinrichtung für ein Kraftfahrzeug mit einer Schaltwelle offenbart. Ein erstes Schaltelement und ein zweites Schaltelement sind über einen in ein Schaltmaul eingreifenden Stift miteinander gekoppelt. Das Schaltmaul ist schwenkbar. Ähnliche Anordnungen sind auch aus der EP 1 510 733 A1 und der EP 0 488 857 A1 bekannt.

### Zusammenfassung der Erfindung

Die Aufgabe der Erfindung ist es, eine Schaltvorrichtung zu schaffen, die sich einfach und kostengünstig herstellen lässt.

Diese Aufgabe ist mit dem Gegenstand des Anspruchs 1 gelöst.

Das Schaltmaul ist schwenkbar angeordnet und der Schaltfinger dementsprechend quer zur Schwenkachse verschiebbar. Durch diese Anordnung ist es möglich, das Schaltmaul an dem schwenkbaren Schaltelement und den Schaltfinger an dem quer verschiebbaren Schaltelement auszubilden. Das Schaltmaul ist im einfachsten Fall eine Aussparung in der Hülse, vorzugsweise eine Aussparung in Form eines Durchgangslochs.

Eine Ausgestaltung der Erfindung sieht vor, das die Anschläge des Schaltmauls aus dem Material der Hülse sind. Jeder lappenartig ausgebildete Anschlag wird zunächst aus dem Mantel der Hülse frei geschnitten und dann radial nach außen abgebogen. Zusätzliches Material zur Bildung eines Schaltmauls wird nicht benötigt. Da das Material für die Lappen aus dem Mantel der Hülse stammt, entstehen Ausnehmungen, die mindestens das Volumen der Lappen aufweisen. Die Hülse wird leichter. Die Fertigung des Schaltmauls ist in die Formgebung des Blechstreifens der Hülse integriert, so dass Zeit gespart wird.

Der Schaltfinger ist in bzw. an dem zweiten, quer zur Schwenkachse verschiebbaren Schaltelement ausgebildet oder an diesem befestigt.

Das zweite Schaltelement ist vorzugsweise eine Schaltgabel oder ist eine Schaltschiene. Diese Schaltelemente sind in der Regel aus Blech gefertigt. Schaltschienen werden häufig aus Blech gestanzt. Die Schaltgabeln sind in diesem Fall an den Schaltschienen befestigt. Eine Ausgestaltung der Erfindung sieht vor, den Schaltfinger einteilig mit der Schaltschiene auszubilden. Beim Stanzen wird die Kontur des Schaltfingers mit ausgeschnitten. Die Anfertigung eines zusätzlichen Schaltfingers und dessen Anbringung an einem Schaltelement kann entfallen. Zeit, Material und Kosten sind gespart. Die Schaltvorrichtung wird leichter.

Die Abmessung des Schaltfingers entspricht damit in die eine Richtung der Dicke des Flachmaterials, aus dem die Schaltschiene gestanzt wurde. Diese Richtung entspricht in der Schaltvorrichtung vorzugsweise der mit der Schwenkachse gleichgerichteten Längsrichtung der Schaltwelle/Hülse.

Der Schaltfinger steht entweder aus der Schaltschiene hervor oder ist in diese so integriert, dass er beidseitig von einer in das Flachmaterial eingebrachten Ausnehmung begrenzt ist. An jeder Ausnehmung liegt dem Schaltfinger vorzugsweise quer zur Schwenkachse des ersten Schaltelements Material des zweiten Schaltelements gegenüber, das beispielsweise als Anschlag für die Begrenzung des Schwenkwinkels des Schaltmauls ausgelegt ist.

### Detaillierte Beschreibung der Zeichnung

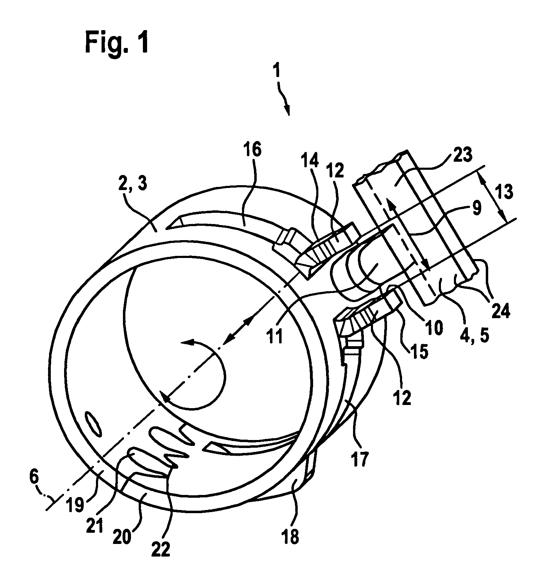

Figur 1 zeigt eine Schaltvorrichtung 1 mit einem zumindest schwenkbaren ersten Schaltelement 2 in Form einer Hülse 3 und wenigstens einem verschiebbaren zweiten Schaltelement 4 in Form einer nur teilweise dargestellten Schaltschiene 5. Das erste Schaltelement 2 ist um eine Schwenkachse 6 in die Richtungen des Doppelpfeils schwenkbar sowie in die mit dem Doppelpfeil markierten Längsrichtungen längsverschiebbar. Das zweite Schaltelement 4 ist quer zur Schwenkachse 6 in die mit dem Doppelpfeil 9 markierten zwei Querrichtungen hin und her verschiebbar. Das erste Schaltelement 2 und das zweite Schaltelement 4 sind über einen in ein Schaltmaul 10 eingreifenden Schaltfinger 11 miteinander gekoppelt. Das Schaltmaul 10 ist zusammen mit der Hülse 3 um die Schwenkachse 6 schwenkbar.

Das Schaltmaul 10 ist an dem ersten Schaltelement 2 ausgebildet und durch zwei Anschläge 12 begrenzt. Die Anschläge 12 liegen sich in Umfangsrichtung einander gegenüber und sind aus der Hülse 3 aus Stahlblech hervorstehende Lappen sowie sind einteilig mit dieser ausgebildet. Der umfangsseitige Abstand (tangential als Strecke oder im Bogenmaß gemessen) zwischen den Anschlägen 12 , mit dem sich die Anschläge 12 umfangsseitig der Hülse 3 an den vom Schaltmaul abgewandten Seiten einander gegenüber liegen, ist größer ist als der umfangsseitige Abstand 13 , mit dem sich die Anschläge 12 an dem Schaltmaul 10 gegenüberliegen. Die Anschläge 12 sind aus dem Material der Hülse 3 frei geschnittene und radial nach außen umgelegte Lappen, so dass sich an der von dem Schaltmaul 10 abgewandten Seite jeweils eine Aussparung 16 bzw. 17 an den Anschlag anschließt. Das Leervolumen der jeweiligen Aussparung 16 bzw. 17 ist aufgrund der Ausarbeitung des jeweiligen Anschlags 12 aus dem Material der Hülse 3 mindestens so groß wie das Volumen der Lappen. Aus der in Figur 1 dargestellten Hülse 3 wurde noch zusätzlich Material ausgestanzt, so dass das Volumen größer ist.

Die Hülse 3 ist aus einem flachen Blechstreifen, der nach dem Stanzen und Formen der Anschläge 12, der Aussparungen 16 und 17 sowie der Ausbildung weiterer Formelemente 18 gebogen und an den Enden 19 und 20 mit ineinander greifenden Formschlusselementen 21 und 22 durch Clinchen umfangsseitig zur Hülse 3 geschlossen wurde.

Das zweite Schaltelement 4 ist aus wenigstens einem Flachmaterial 23 gebildet ist, dessen flache Seiten 24 mit Richtung der Schwenkachse 6 gleichgerichtet ausgerichtet sind. Der Schaltfinger 11 ist an dem Flachmaterial 23 beispielsweise durch Schweißen befestigt. Das Flachmaterial 23 bildet den Körper einer nicht weiter dargestellten Schaltschiene.

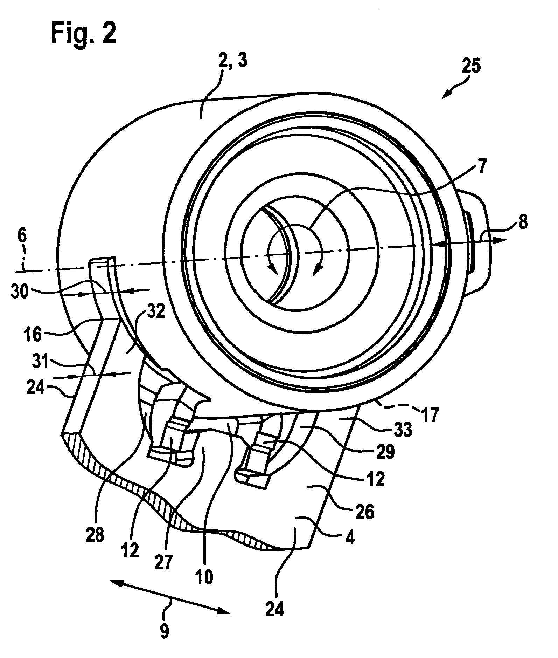

Figur 2 zeigt eine Schaltvorrichtung 25 mit einem zumindest schwenkbaren ersten Schaltelement 2 in Form der Hülse 3 und wenigstens einem verschiebbaren zweiten Schaltelement 4 in Form einer nicht weiter dargestellten Schaltgabel. Das erste Schaltelement 2 ist um eine Schwenkachse 6 in die Richtungen des Doppelpfeils schwenkbar sowie in die mit dem Doppelpfeil markierten Längsrichtungen längsverschiebbar. Das zweite Schaltelement 4 ist quer zur Schwenkachse 6 in die mit dem Doppelpfeil 9 markierten zwei Querrichtungen hin und her verschiebbar. Das erste Schaltelement 2 und das zweite Schaltelement 4 sind über einen in ein Schaltmaul 10 eingreifenden Schaltfinger 27 miteinander gekoppelt. Das Schaltmaul 10 ist zusammen mit der Hülse 3 um die Schwenkachse 6 schwenkbar.

Das Schaltmaul 10 ist an dem ersten Schaltelement 2 ausgebildet und durch zwei Anschläge 12 begrenzt. Die Anschläge 12 liegen sich in Umfangsrichtung einander gegenüber und sind aus der Hülse 3 aus Stahlblech hervorstehende Lappen sowie sind einteilig mit dieser ausgebildet.

Die Anschläge 12 sind aus dem Material der Hülse 3 frei geschnittene und radial nach außen umgelegte Lappen, so dass sich an den von dem Schaltmaul 10 abgewandten Seiten jeweils eine Aussparung 16 bzw. 17 an den Anschlag anschließt. Die Aussparung 17 ist in der Darstellung verdeckt und deshalb nicht sichtbar, ist aber spiegelbildlich gleich zur Aussparung 16 ausgebildet. Das Leervolumen der jeweiligen Aussparung 16 bzw. 17 ist aufgrund der Ausarbeitung des jeweiligen Anschlags 12 aus dem Material der Hülse 3 mindestens so groß wie das Volumen der Lappen. Aus der in Figur 2 dargestellten Hülse 3 wurde noch zusätzlich Material ausgestanzt, so das das Volumen größer ist.

Das zweite Schaltelement 4 ist aus wenigstens einem Flachmaterial 26 gebildet, dessen flache Seiten 24 mit Richtung der Schwenkachse 6 gleichgerichtet ausgerichtet sind. Der Schaltfinger 27 ist einteilig mit der Kontur des Flachmaterials 23 ausgestanzt. Die Abmessungen des Schaltfingers 27 in die mit der Schwenkachse und durch den Doppelpfeil markierten gleichgerichteten Richtungen entsprechen der Materialstärke des Flachmaterials 26. Dem Schaltfinger schließt sich in beide quer zur Schwenkachse 6 gerichteten und mit dem Doppelpfeil 9 markierten Richtungen jeweils eine Ausnehmung 28 bzw. 29 in dem Flachmaterial 26 an. In die Ausnehmungen 28 bzw. 29 greift jeweils einer der Anschläge 12 des Schaltmauls 10 ein. Die mit der Schwenkachse 6 gleichgerichtete Abmessung 30 der Aussparungen 16 und 17 an engster Stelle sind größer als die in gleiche Richtung gerichtete Dicke 31 des Flachmaterials 26, das die Ausnehmungen 28 und 29 in Richtung quer zur Schwenkachse 6 begrenzt. Dadurch ist es möglich an dem Flachmaterial 26 Anschläge 32 und 33 auszubilden, von denen jeder in eine der Aussparung 16 bzw. 17 eingreift und die gemeinsam den Schwenkwinkel der Hülse 3 um die Schwenkachse 6 begrenzen.

### Bezugszeichen

- 1: Schaltvorrichtung
- 2: erstes Schaltelement
- 3: Hülse
- 4: zweites Schaltelement
- 5: Schaltschiene
- 6: Schwenkachse
- 7: Doppelpfeil
- 8: Doppelpfeil
- 9: Doppelpfeil
- 10: Schaltmaul
- 11: Schaltfinger
- 12: Anschlag des Schaltmauls
- 13: Abstand
- 14: Seite des Anschlags
- 15: Seite des Anschlags
- 16: Aussparung
- 17: Aussparung
- 18: Formelement
- 19: Ende
- 20: Ende
- 21: Formschlusselement
- 22: Formschlusselement
- 23: Flachmaterial
- 24: flache Seite des Flachmaterials
- 25: Schaltvorrichtung
- 26: Flachmaterial
- 27: Schaltfinger
- 28: Ausnehmung
- 29: Ausnehmung
- 30: Abmessung
- 31: Dicke
- 32: Anschlag
- 33: Anschlag

## Patentansprüche

1. Schaltvorrichtung (1, 25) mindestens mit einem zumindest schwenkbaren ersten Schaltelement (2) und wenigstens einem verschiebbaren zweiten Schaltelement (4), wobei das erste Schaltelement (2) um eine Schwenkachse (6) schwenkbar und das zweite Schaltelement (4) quer zur Schwenkachse (6) in zwei Querrichtungen hin und her verschiebbar ist und wobei das erste Schaltelement (2) und das zweite Schaltelement (4) über einen in eine Schaltmaul (10) eingreifenden Schaltfinger (11, 27) miteinander gekoppelt sind, wobei das Schaltmaul (10) um die Schwenkachse (6) schwenkbar und an dem ersten Schaltelement (2) ausgebildet ist, wobei das zweite Schaltelement (4) mit dem Schaltfinger (11, 27) versehen, **dadurch gekennzeichnet, daß** das erste Schaltelement (2) eine Hülse (3) aus Blech ist, wobei die Schwenkachse (6) die Mittelachse der Hülse (3) ist.

2. Schaltvorrichtung nach Anspruch 1, **dadurch gekennzeichnet, dass** das Schaltmaul (10) durch zwei Anschläge (12) gebildet ist, die aus dem Material der Hülse (3) und einteilig mit dieser ausgebildet sind und die sich in Umfangsrichtung gegenüber liegen.

3. Schaltvorrichtung nach Anspruch 2, **dadurch gekennzeichnet, dass** der umfangsseitig Abstand zwischen den Anschlägen (12), mit dem sich die Anschläge (12) umfangsseitig der Schalthülse an den vom Schaltmaul abgewandten Seiten (14, 15) einander gegenüber liegen, größer ist als der umfangsseitige Abstand (13), mit dem sich die Anschläge (12) an dem Schaltmaul (10) gegenüberliegen.

4. Schaltvorrichtung nach Anspruch 2, **dadurch gekennzeichnet, dass** sich an der von dem Schaltmaul (10) abgewandten Seite zumindest eines der Anschläge (12) unmittelbar eine Aussparung (16, 17) an den Anschlag (12) anschließt, wobei das Leervolumen der Aussparung (16, 17) mindestens so groß ist, wie das Volumen des aus der Hülse (3) hervorstehenden Anschlags (12).

5. Schaltvorrichtung nach Anspruch 1, **dadurch gekennzeichnet, dass** das zweite Schaltelement (4) aus wenigstens einem Flachmaterial (23, 26) gebildet ist, dessen flache Seiten (24) mit Richtung der Schwenkachse (6) gleichgerichtet ausgerichtet sind.

6. Schaltvorrichtung nach Anspruch 5, **dadurch gekennzeichnet, dass** die Abmessungen des Schaltfingers (27) in die mit der Schwenkachse (6) gleichgerichteten Richtungen der Materialstärke des Flachmaterials (26) entsprechen.

7. Schaltvorrichtung nach den Ansprüchen 5 und 2, **dadurch gekennzeichnet, dass** dem Schaltfinger (27) in beide quer zur Schwenkachse (6) gerichteten Richtungen jeweils eine Ausnehmung (28, 29) in dem Flachmaterial (26) anschließt, in die jeweils einer der Anschläge (12) eingreift.

8. Schaltvorrichtung nach Anspruch 4, **dadurch gekennzeichnet, dass** das zweite Schaltelement (4) aus wenigstens einem Flachmaterial (26) gebildet ist, dessen flache Seiten (24) mit Richtung der Schwenkachse (6) gleichgerichtet ausgerichtet sind und dass sich dem Schaltfinger (27) in beide quer zur Schwenkachse (6) gerichteten Richtungen jeweils eine Ausnehmung (28, 29) in dem Flachmaterial (26) anschließt, in die jeweils einer der Anschläge (12) eingreift, wobei die mit der Schwenkachse (6) gleichgerichtete Abmessung (30) der Aussparungen (16, 17) an engster Stelle größer sind als die in gleiche Richtung gerichtete Dicke (31) des Flachmaterials (26), das die Ausnehmung (28, 29) quer zur Schwenkachse (6) begrenzt.

## Claims

1. Selector apparatus (1, 25) at least having an at least pivotable first selector element (2) and at least one displaceable second selector element (4), it being possible for the first selector element (2) to be pivoted about a pivot axis (6) and for the second selector element (4) to be displaced to and fro in two transverse directions transversely with respect to the pivot axis (6), and the first selector element (2) and the second selector element (4) being coupled to one another via a selector finger (11, 27) which engages into a shifting mouth (10), the shifting mouth (10) being configured on the first selector element (2) and such that it can be pivoted about the pivot axis (6), the second selector element (4) being provided with the selector finger (11, 27), **characterized in that** the first selector element (2) is a sleeve (3) made from sheet metal, the pivot axis (6) being the centre axis of the sleeve (3).

2. Selector apparatus according to Claim 1, **characterized in that** the shifting mouth (10) is formed by two stops (12) which are formed from the material of the sleeve (3) and integrally with the latter and which lie opposite one another in the circumferential direction.

3. Selector apparatus according to Claim 2, **characterized in that** the circumferential-side spacing between the stops (12), at which spacing the stops (12) lie opposite one another on the circumferential side of the selector sleeve on the sides (14, 15) which face away from the shifting mouth, is greater than the circumferential-side spacing (13), at which the stops (12) lie opposite one another on the shifting mouth (10).

4. Selector apparatus according to Claim 2, **characterized in that**, on that side of at least one of the stops (12) which faces away from the shifting mouth (10), a cut-out (16, 17) immediately adjoins the stop (12), the empty volume of the cut-out (16, 17) is at least as great as the volume of the stop (12) which protrudes out of the sleeve (3).

5. Selector apparatus according to Claim 1, **characterized in that** the second selector element (4) is formed from at least one flat material (23, 26), the flat sides (24) of which are oriented in the same direction as the pivot axis (6).

6. Selector apparatus according to Claim 5, **characterized in that** the dimensions of the selector finger (27) in the same directions as the pivot axis (6) correspond to the material thickness of the flat material (26).

7. Selector apparatus according to Claims 5 and 2, **characterized in that** the selector finger (27) is adjoined in both directions directed transversely with respect to the pivot axis (6) by in each case one recess (28, 29) in the flat material (26), into which recess (28, 29) in each case one of the stops (12) engages.

8. Selector apparatus according to Claim 4, **characterized in that** the second selector element (4) is formed from at least one flat material (26), the flat sides (24) of which are oriented in the same direction as the pivot axis (6), and **in that** the selector finger (27) is adjoined in both directions directed transversely with respect to the pivot axis (6) by in each case one recess (28, 29) in the flat material (26), into which recess (28, 29) in each case one of the stops (12) engages, that dimension (30) of the cut-outs (16, 17) which is oriented identically with the pivot axis (6) being greater at the narrowest point than the thickness (31) in the same direction of the flat material (26) which delimits the recess (28, 29) transversely with respect to the pivot axis (6).

## Revendications

1. Dispositif de changement de vitesse (1, 25) comprenant au moins un premier élément de changement de vitesse (2) pouvant au moins pivoter et au moins un deuxième élément de changement de vitesse (4) déplaçable, le premier élément de changement de vitesse (2) pouvant être déplacé de manière pivotante autour d'un axe de pivotement (6) et le deuxième élément de changement de vitesse (4) pouvant être déplacé transversalement à l'axe de pivotement (6) suivant un mouvement de va-et-vient dans deux directions transversales, et le premier élément de changement de vitesse (2) et le deuxième élément de changement de vitesse (4) étant accouplés l'un à l'autre par le biais d'un doigts de changement de vitesse (11, 27) venant en prise dans une mâchoire de changement de vitesse (10), la mâchoire de changement de vitesse (10) pouvant pivoter autour de l'axe de pivotement (6) et étant réalisée sur le premier élément de changement de vitesse (2), le deuxième élément de changement de vitesse (4) étant pourvu du doigt de changement de vitesse (11, 27), **caractérisé en ce que** le premier élément de changement de vitesse (2) est un manchon (3) en tôle, l'axe de pivotement (6) étant l'axe médian du manchon (3).

2. Dispositif de changement de vitesse selon la revendication 1, **caractérisé en ce que** la mâchoire de changement de vitesse (10) est formée par deux butées (12), qui sont réalisées en le matériau du manchon (3) et qui sont est réalisées d'une seule pièce avec celui-ci, et qui sont en regard l'une de l'autre dans la direction périphérique.

3. Dispositif de changement de vitesse selon la revendication 2, **caractérisé en ce que** la distance du côté périphérique entre les butées (12) suivant laquelle les butées (12) sont en regard l'une de l'autre du côté périphérique du manchon de changement de vitesse au niveau des côtés (14, 15) opposés à la mâchoire de changement de vitesse est supérieure à la distance (13) du côté périphérique suivant laquelle les butées (12) sur la mâchoire de changement de vitesse (10) sont en regard l'une de l'autre.

4. Dispositif de changement de vitesse selon la revendication 2, **caractérisé en ce qu'**au niveau du côté d'au moins l'une des butées (12) opposé à la mâchoire de changement de vitesse (10), un évidement (16, 17) se raccorde directement à la butée (12), le volume à vide de l'évidement (16, 17) étant au moins aussi grand que le volume de la butée (12) saillant hors du manchon (3).

5. Dispositif de changement de vitesse selon la revendication 1, **caractérisé en ce que** le deuxième élément de changement de vitesse (4) est formé d'au moins un matériau plat (23, 26), dont les côtés plats (24) sont orientés dans le même sens que la direction de l'axe de pivotement (6).

6. Dispositif de changement de vitesse selon la revendication 5, **caractérisé en ce que** les dimensions du doigt de changement de vitesse (27) dans les directions orientées dans le même sens que l'axe de pivotement (6) correspondent à l'épaisseur de matériau du matériau plat (26).

7. Dispositif de changement de vitesse selon les revendications 5 et 2, **caractérisé en ce qu'**un logement respectif (28, 29) dans le matériau plat (26) se raccorde au doigt de changement de vitesse (27) dans les deux directions orientées transversalement à l'axe de pivotement (6), dans lesquels logements vient en prise à chaque fois l'une des butées (12).

8. Dispositif de changement de vitesse selon la revendication 4, **caractérisé en ce que** le deuxième élément de changement de vitesse (4) est formé d'au moins un matériau plat (26) dont les côtés plats (24) sont orientés dans la même direction que la direction de l'axe de pivotement (6) et **en ce qu'**un logement respectif (28, 29) dans le matériau plat (26) se raccorde au doigt de changement de vitesse (27) dans les deux directions orientées transversalement à l'axe de pivotement (6), dans lesquels logements vient en prise à chaque fois l'une des butées (12), les dimensions (30) des évidements (16, 17) orientées dans le même sens que l'axe de pivotement (6) étant plus grandes, à l'endroit le plus étroit, que l'épaisseur (31) orientée dans la même direction du matériau plat (26) qui limite le logement (28, 29) transversalement à l'axe de pivotement (6).
